# EUROPÄISCHE PATENTSCHRIFT

(11) **EP 4 046 108 B1**
(45) Veröffentlichungstag und Bekanntmachung des Hinweises auf die Patenterteilung: **24.12.2025**
(21) Anmeldenummer: 20790190.1
(22) Anmeldetag: 30.09.2020
(51) Int. Cl.: G06Q 10/08, A47G 29/14, G06Q 10/083, G05D 1/00

(54) **SYSTEM UND VERFAHREN ZUM TRANSPORT VON WAREN**
SYSTEM AND METHOD FOR TRANSPORTING GOODS
SYSTÈME ET PROCÉDÉ POUR LE TRANSPORT DE MARCHANDISES

(30) Priorität: 15.10.2019 DE 102019007151
(43) Veröffentlichungstag der Anmeldung: 24.08.2022
(73) Patentinhaber: SEW-EURODRIVE GmbH & Co. KG, 76646 Bruchsal (DE)
(72) Erfinder: WINTER, Maximilian, 69115 Heidelberg (DE); LAGIER, Friedrich, 76137 Karlsruhe (DE); SCHÖNUNG, Frank, 76676 Graben-Neudorf (DE); SCHMIDT, Josef, 76676 Graben-Neudorf (DE)
(86) Internationale Anmeldenummer: PCT/EP2020/025440
(87) Internationale Veröffentlichungsnummer: WO 2021/073771

(56) Entgegenhaltungen:
- EP-A1- 3 287 399
- EP-A1- 3 287 400
- WO-A1-2018/052434
- CH-A2- 705 000
- DE-A1- 102013 018 268
- GB-A- 2 544 657

## Beschreibung

Die Erfindung betrifft ein System zum Transport von Waren, welches mindestens einen Transportbehälter zur Aufnahme von Waren, mindestens ein fahrerloses Transportfahrzeug zum Transport des mindestens einen Transportbehälter und mindestens eine Übergabestation, an welcher der mindestens einen Transportbehälter positionierbar ist, umfasst. Die Erfindung betrifft auch ein Verfahren zum Transport von Waren mittels eines erfindungsgemäßen Systems.

Durch Benutzung sind Systeme zum Transport von Waren bekannt, welche fahrerlose Transportfahrzeuge aufweisen. Mittels eines solchen fahrerlosen Transportfahrzeugs können Transportbehälter, beispielsweise Kisten oder Paletten, insbesondere zu definierten Übergabestationen transportiert werden. Die Transportbehälter dienen zur Aufnahme von den zu transportierenden Waren. Transportbehälter mit den zu transportierenden Waren werden von den fahrerlosen Transportfahrzeugen an einer Übergabestation positioniert und stehen dort für einen Empfänger bereit.

Aus der DE 10 2012 025 152 A1 ist ein fahrerloses Transportfahrzeug bekannt, welches ein Chassis und an dem Chassis angeordnete Rollen, insbesondere Lenkrollen, aufweist. Ferner ist eine Antriebseinheit vorgesehen, welche ein von einem Elektromotor angetriebenes Rad aufweist.

Aus der DE 10 2012 203 575 A1 ist ein fahrerloses Transportsystem für eine Fertigungs- und/oder Verpackungsanlage bekannt. Das fahrerlose Transportsystem umfasst mehrere Transportfahrzeuge zum Transport von Paletten. Die Transportfahrzeuge dienen insbesondere zum Transport von Leerpaletten und fertig konfektionierten Paletten innerhalb der Fertigungs- und/oder Verpackungsanlage.

Aus der WO 2018/052434 A1 ist ein System bekannt, welches einen Server und eine Mehrzahl von Transportbehältern umfasst. Die Transportbehälter weisen jeweils Räder und einen mit den Rädern verbundenen Antrieb auf. Die WO 2018/052434 A1 offenbart den Oberbegriff des Anspruchs 1.

Aus der DE 10 2013 018 268 A1 ist ein Transportsystem bekannt, welches eine stationäre Fördereinheit und ein Fahrzeug umfasst. Ein Fördergut ist mittels eines Lastaufnahmemittels von der Fördereinheit zu dem Fahrzeug bewegbar.

Aus der CH 705 000 A2 ist eine Vorrichtung zur Lagerung und zum Transport von Containern bekannt.

Aus der EP 3 287 400 A1 und der EP 3 287 399 A1 sind Transportsysteme bekannt, welche ein Lieferfahrzeug zur Auslieferung von Lieferboxen umfassen. Die Lieferfahrzeuge sind dabei von einem Trägerfahrzeug aufnehmbar.

Aus der GB 2544657 A ist ein Container zur Aufnahme von Lieferungen bekannt. Der Container weist einen Hohlraum auf, welcher von einer Klappe oder Tür verschließbar ist.

Die Lieferung von Waren an private Empfänger verursacht für Zulieferer derzeit einen hohen Aufwand verbunden mit hohen Kosten. Problematisch ist dabei insbesondere, dass private Empfänger unregelmäßig Waren erhalten, und dass private Empfänger oft nicht persönlich anwesend sind, um bestellte Waren entgegen zu nehmen. In der Folge müssen bestellte Waren mehrfach zugestellt und in der Zwischenzeit gelagert werden.

Der Erfindung liegt die Aufgabe zugrunde, ein System und ein Verfahren zum Transport von Waren weiterzubilden. Dabei soll insbesondere eine Entnahme des Transportbehälters während des Transports sowie nach der Positionierung an der Übergabestation durch Unbefugte verhindert werden.

Die Aufgabe wird durch ein System zum Transport von Waren mit den in Anspruch 1 angegebenen Merkmalen gelöst. Vorteilhafte Ausgestaltungen und Weiterbildungen sind Gegenstand der Unteransprüche. Die Aufgabe wird auch durch ein Verfahren zum Transport von Waren mit den in Anspruch 11 angegebenen Merkmalen gelöst. Vorteilhafte Ausgestaltungen und Weiterbildungen sind Gegenstand der Unteransprüche.

Ein gattungsgemäßes System zum Transport von Waren umfasst mindestens einen Transportbehälter zur Aufnahme von Waren, mindestens ein fahrerloses Transportfahrzeug zum Transport des mindestens einen Transportbehälter und mindestens eine Übergabestation. An der Übergabestation ist der mindestens einen Transportbehälter positionierbar.

Erfindungsgemäß weist der mindestens einen Transportbehälter eine Verriegelungsvorrichtung auf. Ferner weist das fahrerlose Transportfahrzeug eine erste Verriegelungseinheit auf, und die Übergabestation weist eine zweite Verriegelungseinheit auf. Dabei ist die Verriegelungsvorrichtung des Transportbehälters mit der ersten Verriegelungseinheit des mindestens einen fahrerlosen Transportfahrzeugs sowie mit der zweiten Verriegelungseinheit der mindestens einen Übergabestation verriegelbar.

Erfindungsgemäß ist die Übergabestation annähernd in Form eines U-Profils ausgebildet und weist einen ersten Seitenschenkel, einen zweiten Seitenschenkel und einen dritten Seitenschenkel, welcher den ersten Seitenschenkel und den zweiten Seitenschenkel verbindet, auf. Der dritte Seitenschenkel ist annähernd flächig ausgebildet und erstreckt sich rechtwinklig zu einer Vertikalrichtung. Der erste Seitenschenkel und der zweite Seitenschenkel sind jeweils annähernd flächig ausgebildet und erstrecken sich rechtwinklig zu einer Querrichtung. Der erste Seitenschenkel und der zweite Seitenschenkel sind in der Querrichtung beabstandet voneinander angeordnet. Zwischen den Seitenschenkeln ist ein Durchgangsbereich gebildet, welcher sich in eine Längsrichtung erstreckt. Eine Ausdehnung des Durchgangsbereichs in der Querrichtung ist derart gewählt, dass ein Einfahren des fahrerlosen Transportfahrzeugs in den Durchgangsbereich möglich ist.

Durch eine Verriegelung der Verriegelungsvorrichtung mit der ersten Verriegelungseinheit ist der Transportbehälter an dem fahrerlosen Transportfahrzeug fixiert und somit während des Transports zu der Übergabestation gegen eine Entnahme durch Unbefugte gesichert. Durch eine Verriegelung der Verriegelungsvorrichtung mit der zweiten Verriegelungseinheit ist der Transportbehälter an der Übergabestation fixiert und somit auch nach der Positionierung an der Übergabestation gegen eine Entnahme durch Unbefugte gesichert. Es ist somit möglich, den Transportbehälter an der Übergabestation zu positionieren und für einen Empfänger bereitzustellen, auch wenn der Empfänger nicht an der Übergabestation anwesend ist. Eine Entnahme des Transportbehälters während des Transports sowie nach der Positionierung an der Übergabestation durch Unbefugte, also ein Diebstahl des Transportbehälters, ist somit vorteilhaft verhindert. Das erfindungsgemäße System eignet sich insbesondere zur Lieferung von Waren an einen privaten Empfänger, der zum Zeitpunkt der Lieferung nicht persönlich anwesend ist. Der besagte Empfänger nimmt die gelieferten Waren dann zu einem späteren Zeitpunkt an der Übergabestation entgegen.

Gemäß einer vorteilhaften Ausgestaltung der Erfindung weist das mindestens ein fahrerloses Transportfahrzeug eine Ansteuereinheit auf. Mittels der Ansteuereinheit ist die Verriegelungsvorrichtung des Transportbehälters von der ersten Verriegelungseinheit des Transportfahrzeugs entriegelbar. Mittels der Ansteuereinheit ist die Verriegelungsvorrichtung des Transportbehälters auch von der zweiten Verriegelungseinheit der Übergabestation entriegelbar. Das fahrerlose Transportfahrzeug ist somit in der Lage, eine Fixierung des Transportbehälters an dem fahrerlosen Transportfahrzeug sowie an der Übergabestation aufzuheben.

Gemäß einer vorteilhaften Weiterbildung der Erfindung ist die Verriegelungsvorrichtung derart ausgestaltet, dass in Abwesenheit der Ansteuereinheit die Verriegelungsvorrichtung automatisch mit der ersten Verriegelungseinheit oder mit der zweiten Verriegelungseinheit verriegelt wird. Wenn die Ansteuereinheit also von der Verriegelungsvorrichtung entfernt wird, so wird der Transportbehälter automatisch an dem fahrerlosen Transportfahrzeug oder an der Übergabestation fixiert.

Gemäß einer anderen vorteilhaften Weiterbildung der Erfindung ist die Verriegelungsvorrichtung mittels der Ansteuereinheit mit der ersten Verriegelungseinheit verriegelbar. Auch ist die Verriegelungsvorrichtung mittels der Ansteuereinheit mit der zweiten Verriegelungseinheit verriegelbar. Somit ist der Transportbehälter gezielt durch die Ansteuereinheit an dem fahrerlosen Transportfahrzeug sowie an der Übergabestation fixierbar.

Gemäß einer vorteilhaften Ausgestaltung der Erfindung weist das mindestens ein fahrerloses Transportfahrzeug eine Hubeinheit auf. Mittels der Hubeinheit ist der mindestens ein Transportbehälter in die Vertikalrichtung relativ zu einem Chassis des fahrerlosen Transportfahrzeugs bewegbar. Durch eine solche Hubbewegung ist der Transportbehälter insbesondere von dem fahrerlosen Transportfahrzeug auf die Übergabestation positionierbar, auch wenn die Übergabestation in Vertikalrichtung eine andere Höhe aufweist als das fahrerlose Transportfahrzeug. Ferner gestattet eine solche Hubbewegung, die Verriegelungsvorrichtung des Transportbehälters von den Verriegelungseinheiten des fahrerlosen Transportfahrzeugs sowie der Übergabestation in Vertikalrichtung zu entfernen und auch in Vertikalrichtung mit den Verriegelungseinheiten des fahrerlosen Transportfahrzeugs sowie der Übergabestation zusammenzuführen.

Gemäß einer vorteilhaften Ausgestaltung der Erfindung weist die Hubeinheit eine Hebebühne zum Anheben und Absenken des mindestens eines Transportbehälters auf. Optional umfasst die Hubeinheit eine Waage zur Messung eines Gewichts des mindestens eines Transportbehälters. Ein Gewicht der von dem mindestens einen Transportbehälter aufgenommenen Waren errechnet sich als Differenz aus dem gemessenen Gewicht des Transportbehälters und einem Leergewicht des Transportbehälters.

Gemäß einer vorteilhaften Weiterbildung der Erfindung weist das mindestens ein fahrerloses Transportfahrzeug eine Kommunikationsschnittstelle zur Kommunikation mit dem mindestens einen Transportbehälter und/oder mit der mindestens eine Übergabestation auf. Optional ist mittels der besagten Kommunikationsschnittstelle auch eine Kommunikation mit externen Geräten, beispielsweise einem Mobiltelefon, möglich. Die Kommunikationsschnittstelle ist beispielsweise drahtgebunden oder drahtlos ausgeführt. Über die Kommunikationsschnittstelle sind insbesondere das gemessene Gewicht des mindestens eines Transportbehälters sowie das berechnete Gewicht der von dem mindestens einen Transportbehälter aufgenommenen Waren zu dem Transportbehälter sowie zu der Übergabestation übertragbar.

Gemäß einer vorteilhaften Weiterbildung der Erfindung weist die mindestens eine Übergabestation eine Kommunikationsschnittstelle zur Kommunikation mit dem mindestens einen Transportbehälter und/oder mit dem mindestens einen fahrerlosen Transportfahrzeug auf. Optional ist mittels der besagten Kommunikationsschnittstelle auch eine Kommunikation mit externen Geräten, beispielsweise einem Mobiltelefon, möglich. Die Kommunikationsschnittstelle ist beispielsweise drahtgebunden oder drahtlos ausgeführt. Über die Kommunikationsschnittstelle ist insbesondere eine Zustandsmeldung zu dem Transportbehälter sowie zu dem fahrerlosen Transportfahrzeug übertragbar. Die Zustandsmeldung besagt beispielsweise, ob sich bereits ein anderer Transportbehälter auf der Übergabestation befindet, oder ob die Übergabestation bereit zur Aufnahme des Transportbehälters ist.

Gemäß einer vorteilhaften Weiterbildung der Erfindung weist der mindestens einen Transportbehälter eine Kommunikationsschnittstelle zur Kommunikation mit dem mindestens einen fahrerlosen Transportfahrzeug und/oder mit der mindestens eine Übergabestation auf. Optional ist mittels der besagten Kommunikationsschnittstelle auch eine Kommunikation mit externen Geräten, beispielsweise einem Mobiltelefon, möglich. Die Kommunikationsschnittstelle ist beispielsweise drahtgebunden oder drahtlos ausgeführt. Über die Kommunikationsschnittstelle sind beispielsweise Informationen über den Inhalt des Transportbehälters sowie über das Ziel und den Empfänger des Transportbehälters zu dem fahrerlosen Transportfahrzeug übertragbar. So besteht die Möglichkeit, den Transportbehälter unabhängig von dem fahrerlosen Transportfahrzeug zu beladen, wobei das fahrerlose Transportfahrzeug einen Auftrag zum Transport von dem Transportbehälter selbst bekommt.

Über die Kommunikationsschnittstelle ist beispielsweise auch das Gewicht des mindestens einen Transportbehälter sowie das berechnete Gewicht der von dem mindestens einen Transportbehälter aufgenommenen Waren zu der Übergabestation übertragbar.

Gemäß einer vorteilhaften Ausgestaltung der Erfindung weist der mindestens einen Transportbehälter eine Anzeigeeinheit zur Anzeige von Informationen auf. Auf der Anzeigeeinheit werden beispielsweise ein Name des Empfängers der Waren, das gemessene Gewicht des mindestens eines Transportbehälters sowie das berechnete Gewicht der von dem mindestens einen Transportbehälter aufgenommenen Waren angezeigt. Ferner ist es denkbar, besagte Informationen über eine Kommunikationsschnittstelle des Transportbehälters zu einem Mobiltelefon des befugten Empfängers zu übertragen. Das Mobiltelefon dient in diesem Fall als Anzeigeeinheit.

Gemäß einer weiteren vorteilhaften Ausgestaltung der Erfindung weist das mindestens ein fahrerloses Transportfahrzeug eine Anzeigeeinheit zur Anzeige von Informationen auf. Auf der Anzeigeeinheit werden beispielsweise ein Name des Empfängers der Waren, das gemessene Gewicht des mindestens eines Transportbehälters sowie das berechnete Gewicht der von dem mindestens einen Transportbehälter aufgenommenen Waren angezeigt. Ferner ist es denkbar, besagte Informationen über eine Kommunikationsschnittstelle des fahrerlosen Transportfahrzeugs zu einem Mobiltelefon des befugten Empfängers zu übertragen. Das Mobiltelefon dient in diesem Fall als Anzeigeeinheit.

Gemäß einer bevorzugten Ausgestaltung der Erfindung weist der mindestens einen Transportbehälter ein Grundgehäuse und einen Deckel, mittels welchem das Grundgehäuse verschließbar ist, auf. Dabei umgeben das Grundgehäuse und der Deckel einen Hohlraum, in welchen zu transportierende Waren einsetzbar sind. Die zu transportierenden Waren sind dabei von dem Grundgehäuse und dem Deckel umgeben und somit von Umwelteinflüssen wie beispielsweise Sonneneinstrahlung, Wind und Regen geschützt.

Gemäß einer bevorzugten Weiterbildung der Erfindung weist der mindestens einen Transportbehälter ein Verriegelungsmodul auf, mittels welchem der Deckel mit dem Grundgehäuse verriegelbar ist. Das Verriegelungsmodul ist dabei derart ausgestaltet, dass der Deckel nur von dazu befugten Personen zu öffnen ist. Zur Prüfung, ob eine Person zur Öffnung des Deckels befugt ist, sind geeignete Sicherungseinrichtungen vorgesehen, beispielsweise ein Fingerabdruckscanner, eine Tastatur zur Eingabe eines PIN-Codes, eine Funkschnittstelle, insbesondere Bluetooth oder WLAN, zur Kommunikation mit einem Mobiltelefon oder Ähnliches. Zur Versorgung der besagten Sicherungseinrichtungen umfasst der Transportbehälter einen elektrischen Energiespeicher, beispielsweise in Form eines Akkus. Dadurch ist eine Entnahme der Waren aus dem Transportbehälter während des Transports sowie nach der Positionierung an der Übergabestation durch Unbefugte vorteilhaft verhindert. Die in dem Transportbehälter befindlichen Waren sind somit vor Diebstahl geschützt.

Bei einem erfindungsgemäßen Verfahren zum Transport von Waren mittels eines erfindungsgemäßen Systems zum Transport von Waren ist vorgesehen, dass zunächst die Verriegelungsvorrichtung des Transportbehälters mit der ersten Verriegelungseinheit des fahrerlosen Transportfahrzeugs verriegelt wird. Anschließend wird der Transportbehälter von dem fahrerlosen Transportfahrzeug zu der Übergabestation transportiert. Dann wird die Verriegelungsvorrichtung des Transportbehälters von der ersten Verriegelungseinheit des fahrerlosen Transportfahrzeugs entriegelt, und die Verriegelungsvorrichtung des Transportbehälters wird mit der zweiten Verriegelungseinheit der Übergabestation verriegelt.

Durch die Verriegelung der Verriegelungsvorrichtung mit der ersten Verriegelungseinheit ist der Transportbehälter an dem fahrerlosen Transportfahrzeug fixiert und somit während des Transports zu der Übergabestation gegen eine Entnahme durch Unbefugte gesichert. Durch die Verriegelung der Verriegelungsvorrichtung mit der zweiten Verriegelungseinheit ist der Transportbehälter an der Übergabestation fixiert und somit auch nach der Positionierung an der Übergabestation gegen eine Entnahme durch Unbefugte gesichert. Der Transportbehälter wird somit an der Übergabestation positioniert und für einen Empfänger bereitgestellt. Dabei ist die Anwesenheit des Empfängers an der Übergabestation nicht erforderlich. Eine Entnahme des Transportbehälters während des Transports sowie nach der Positionierung an der Übergabestation durch Unbefugte, also ein Diebstahl des Transportbehälters, ist somit vorteilhaft verhindert.

Gemäß einer vorteilhaften Ausgestaltung der Erfindung werden zu transportierende Waren in einen Hohlraum des Transportbehälters eingesetzt, bevor der Transportbehälter von dem fahrerlosen Transportfahrzeug zu der Übergabestation transportiert wird. Auf diese Art sind Waren, beispielsweise von einem Warenlager, zu der Übergabestation und zu dem Empfänger transportierbar. Das Verfahren eignet sich insbesondere zur Lieferung von Waren an einen privaten Empfänger, der zum Zeitpunkt der Lieferung nicht persönlich anwesend ist. Der Empfänger nimmt die gelieferten Waren dann zu einem späteren Zeitpunkt an der Übergabestation entgegen.

Gemäß einer weiteren vorteilhaften Ausgestaltung der Erfindung werden zu transportierende Waren in einen Hohlraum des Transportbehälters eingesetzt, nachdem die Verriegelungsvorrichtung des Transportbehälters mit der zweiten Verriegelungseinheit der Übergabestation verriegelt wird. Auf diese Art ist eine Abholung der Waren von der Übergabestation und ein Transport beispielsweise zu einem Warenlager ermöglicht. Das Verfahren eignet sich insbesondere zur Abholung von Waren eines privaten Versenders, der zum Zeitpunkt der Abholung nicht persönlich anwesend ist. Der Versender setzt die Waren an der Übergabestation in den Transportbehälter ein, welcher dann zu einem späteren Zeitpunkt abgeholt wird. Bei den Waren handelt es sich beispielsweise um Rücksendungen oder auch um Hausmüll.

Gemäß einer vorteilhaften Weiterbildung der Erfindung wird, nachdem die Verriegelungsvorrichtung des Transportbehälters mit der zweiten Verriegelungseinheit der Übergabestation verriegelt wird, zu einem späteren Zeitpunkt, die Verriegelungsvorrichtung des Transportbehälters von der zweiten Verriegelungseinheit der Übergabestation wieder entriegelt, und die Verriegelungsvorrichtung des Transportbehälters wird mit der ersten Verriegelungseinheit des fahrerlosen Transportfahrzeugs verriegelt. Anschließend wird der Transportbehälter von dem fahrerlosen Transportfahrzeug von der Übergabestation weg transportiert. Der Transportbehälter wird somit an der Übergabestation zur Abholung bereitgestellt, wobei die Anwesenheit des Empfängers an der Übergabestation nicht erforderlich ist. Eine Entnahme des Transportbehälters während der Positionierung an der Übergabestation sowie während des Transports durch Unbefugte, also ein Diebstahl des Transportbehälters, ist dabei vorteilhaft verhindert.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine Explosionsdarstellung eines Systems zum Transport von Waren,
- Figur 2:: das System aus Figur 1 während des Transports eines Transportbehälters zu einer Übergabestation,
- Figur 3:: das System aus Figur 1 mit angehobenem Transportbehälter,
- Figur 4:: das System aus Figur 1 mit in der Übergabestation befindlichem fahrerlosen Transportfahrzeug,
- Figur 5:: das System aus Figur 1 mit auf der Übergabestation abgesetztem Transportbehälter,
- Figur 6:: das System aus Figur 1 mit wegfahrendem fahrerlosem Transportfahrzeug und
- Figur 7:: das System aus Figur 1 mit geöffnetem Transportbehälter.

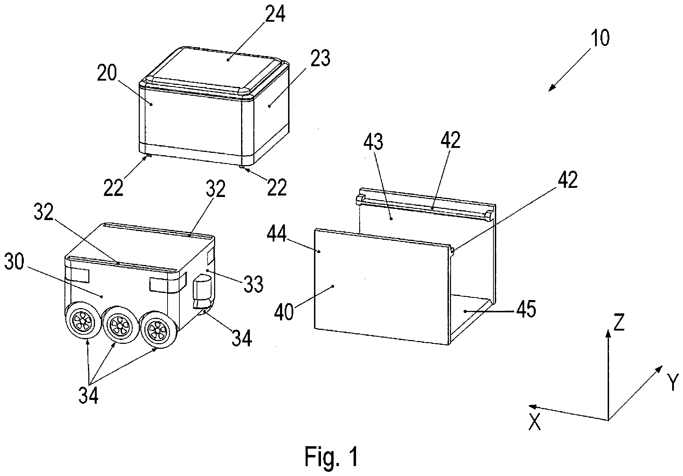

Figur 1 zeigt eine Explosionsdarstellung eines Systems 10 zum Transport von Waren. Das System 10 umfasst einen Transportbehälter 20 zur Aufnahme von Waren, ein fahrerloses Transportfahrzeug 30 zum Transport des Transportbehälters 20 und eine Übergabestation 40, an welcher der Transportbehälter 20 positionierbar ist. Das System 10 dient vorliegend zur Lieferung von Waren zu einem privaten Empfänger. Die Übergabestation 40 befindet sich dazu beispielsweise vor einem Wohnhaus, in welchem der private Empfänger wohnt.

Die Übergabestation 40 ist annähernd in Form eines U-Profils ausgebildet und weist einen ersten Seitenschenkel 43, einen zweiten Seitenschenkel 44 und einen dritten Seitenschenkel 45 auf, welcher den ersten Seitenschenkel 43 und den zweiten Seitenschenkel 44 verbindet. Der dritte Seitenschenkel 45 ist annähernd flächig ausgebildet und erstreckt sich rechtwinklig zu einer Vertikalrichtung Z. Die Seitenschenkel 43, 44 sind jeweils annähernd flächig ausgebildet und erstrecken sich rechtwinklig zu einer Querrichtung Y.

Die Vertikalrichtung Z verläuft dabei rechtwinklig zu einem Boden. Die Querrichtung Y verläuft rechtwinklig zu der Vertikalrichtung Z. Eine Längsrichtung X verläuft rechtwinklig zu der Querrichtung Y und rechtwinklig zu der Vertikalrichtung Z. Die Längsrichtung X und die Querrichtung Y verlaufen somit horizontal und rechtwinklig zu dem Boden.

Der dritte Seitenschenkel 45 ist in dem Boden fest verankert. Somit ist die Übergabestation 40 gegen Diebstahl gesichert. Der erste Seitenschenkel 43 und der zweite Seitenschenkel 44 sind in der Querrichtung Y beabstandet voneinander angeordnet. Zwischen den Seitenschenkeln 43, 44 ist somit ein Durchgangsbereich gebildet, welcher sich in die Längsrichtung X erstreckt. Eine Ausdehnung des Durchgangsbereichs in der Querrichtung Y ist derart gewählt, dass ein Einfahren des fahrerlosen Transportfahrzeugs 30 in den Durchgangsbereich möglich ist. Ein Einfahren in den Durchgangsbereich sowie ein Ausfahren aus dem Durchgangsbereich ist dabei für das fahrerlose Transportfahrzeugs 30 von beiden Seiten her möglich.

An dem ersten Seitenschenkel 43 und an dem zweiten Seitenschenkel 44 ist jeweils eine Halteleiste 42 angebracht. Die Halteleisten 42 sind dabei in einem dem dritten Seitenschenkel 45 abgewandten Bereich der Seitenschenkel 43, 44 angeordnet und ragen in den besagten Durchgangsbereich hinein. Die Halteleisten 42 bilden eine zweite Verriegelungseinheit der Übergabestation 40.

Das fahrerlose Transportfahrzeug 30 umfasst ein Chassis 33 sowie eine Mehrzahl von Laufrädern 34. Vorliegend umfasst das fahrerlose Transportfahrzeug 30 sechs Laufräder 34. Zumindest ein Teil der Laufräder 34 ist von einem hier nicht dargestellten Motor antreibbar. Das fahrerlose Transportfahrzeug 30 umfasst auch einen elektrischen Energiespeicher zur Versorgung des Motors. Auch ist zumindest ein Teil der Laufräder 34 lenkbar. Alternativ besitzt das fahrerlose Transportfahrzeug 30 eine Differentiallenkung. Dabei sind die Laufräder 34 nicht lenkbar, aber durch unterschiedliche Geschwindigkeiten der Laufräder 34 auf beiden Seiten ist das fahrerlose Transportfahrzeug 30 lenkbar, ähnlich wie bei einem Kettenantrieb eines Panzers oder eines Baggers. In der hier gezeigten Darstellung bewegt sich das fahrerlose Transportfahrzeug 30 in die Längsrichtung X.

Das fahrerlose Transportfahrzeug 30 umfasst ferner eine hier nicht dargestellte Hubeinheit, mittels welcher ein auf dem Transportfahrzeug 30 befindlicher Transportbehälter 20 in die Vertikalrichtung Z relativ zu dem Chassis 33 bewegbar ist. Die Hubeinheit weist dazu beispielsweise eine Hebebühne auf.

Das fahrerlose Transportfahrzeug 30 umfasst auch zwei Ausnehmungen 32, welche beabstandet voneinander angeordnet sind. In der hier gezeigten Darstellung sind die Ausnehmungen 32 in der Querrichtung Y beabstandet voneinander angeordnet. Die Ausnehmungen 32 bilden dabei eine erste Verriegelungseinheit des fahrerlosen Transportfahrzeugs 30.

Der Transportbehälter 20 umfasst ein Grundgehäuse 23 und einen Deckel 24. In der hier gezeigten Darstellung ist das Grundgehäuse 23 mittels dem Deckel 24 verschlossen. Das Grundgehäuse 23 und der Deckel 24 umgeben einen hier verdeckten Hohlraum 25, in welchen zu transportierende Waren einsetzbar sind. Der Transportbehälter 20 weist auch ein hier nicht dargestelltes Verriegelungsmodul auf, mittels welchem der Deckel 24 mit dem Grundgehäuse 23 verriegelbar ist. Wenn der Deckel 24 mit dem Grundgehäuse 23 verriegelt ist, so sind in dem Hohlraum 25 befindliche Waren vor unbefugtem Zugriff geschützt.

Der Transportbehälter 20 weist auch eine Verriegelungsvorrichtung auf. Die Verriegelungsvorrichtung umfasst eine Mehrzahl von beweglichen Klinken 22, welche mit den Ausnehmungen 32 des fahrerlosen Transportfahrzeugs 30 sowie mit den Halteleisten 42 der Übergabestation 40 zusammenwirken.

Die Verriegelungsvorrichtung des Transportbehälters 20 ist mit der ersten Verriegelungseinheit des fahrerlosen Transportfahrzeugs 30 verriegelbar. Zum Verriegeln greifen die Klinken 22 der Verriegelungsvorrichtung in die Ausnehmungen 32 ein, welche die erste Verriegelungseinheit des fahrerlosen Transportfahrzeugs 30 bilden.

Die Verriegelungsvorrichtung des Transportbehälters 20 ist auch mit der zweiten Verriegelungseinheit der Übergabestation 40 verriegelbar. Zum Verriegeln greifen die Klinken 22 der Verriegelungsvorrichtung in die Halteleisten 42 ein, welche die zweite Verriegelungseinheit der Übergabestation 40 bilden.

Nachfolgend wird das Verfahren zum Transport von Waren mittels des Systems 10 zum Transport von Waren anhand eines Beispiels erläutert. Zunächst werden die Waren, die zu der Übergabestation 40 zu transportieren sind, in den Hohlraum 25 des Transportbehälters 20 eingesetzt. Anschließend wird der Deckel 23 des Transportbehälters 20 geschlossen und durch das Verriegelungsmodul mit dem Grundgehäuse 23 verriegelt.

Die Verriegelungsvorrichtung des Transportbehälters 20 wird mit der ersten Verriegelungseinheit des fahrerlosen Transportfahrzeugs 30 verriegelt. Anschließend wird der Transportbehälter 20 von dem fahrerlosen Transportfahrzeug 30 zu der Übergabestation 40 transportiert.

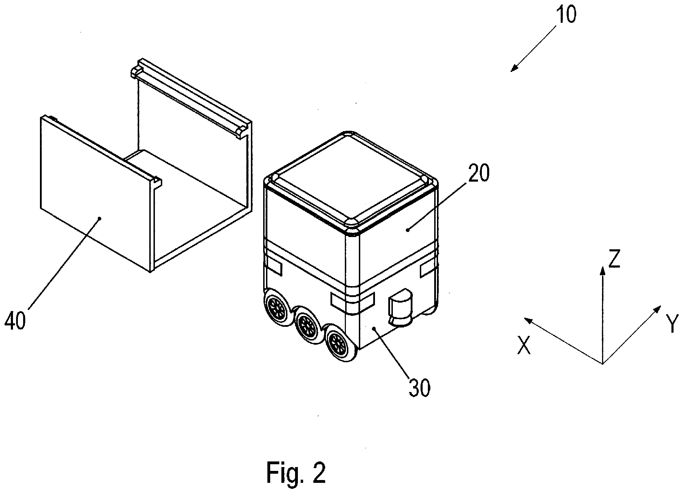

Figur 2 zeigt das System 10 aus Figur 1 während des Transports des Transportbehälters 20 auf dem fahrerlosen Transportfahrzeug 30 zu der Übergabestation 40. In der hier gezeigten Darstellung bewegt sich das fahrerlose Transportfahrzeug 30 dabei in die Längsrichtung X auf die Übergabestation 40 zu.

Die Verriegelungsvorrichtung des Transportbehälters 20 ist während des Transports mit der ersten Verriegelungseinheit des fahrerlosen Transportfahrzeugs 30 verriegelt. Dabei greifen die hier verdeckten Klinken 22 der Verriegelungsvorrichtung in die hier verdeckten Ausnehmungen 32 ein, welche die erste Verriegelungseinheit des fahrerlosen Transportfahrzeugs 30 bilden. Der Transportbehälter 20 befindet sich dabei in der Vertikalrichtung Z oberhalb des fahrerlosen Transportfahrzeugs 30.

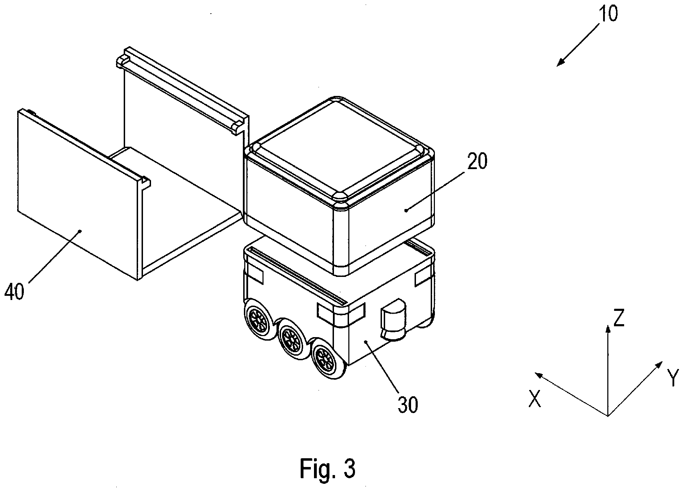

Figur 3 zeigt das System aus Figur 1 in unmittelbarer Nähe der Übergabestation 40 mit angehobenem Transportbehälter 20. Die Verriegelungsvorrichtung des Transportbehälters 20 wird von der ersten Verriegelungseinheit des fahrerlosen Transportfahrzeugs 30 entriegelt, und der Transportbehälter 20 wird von der Hubeinheit des fahrerlosen Transportfahrzeugs 30 angehoben, also in die Vertikalrichtung Z nach oben bewegt.

Zum Entriegeln der Verriegelungsvorrichtung von der ersten Verriegelungseinheit weist das fahrerlose Transportfahrzeug 30 eine hier nicht dargestellte Ansteuereinheit auf. Mittels der Ansteuereinheit ist die Verriegelungsvorrichtung auch von der zweiten Verriegelungseinheit entriegelbar.

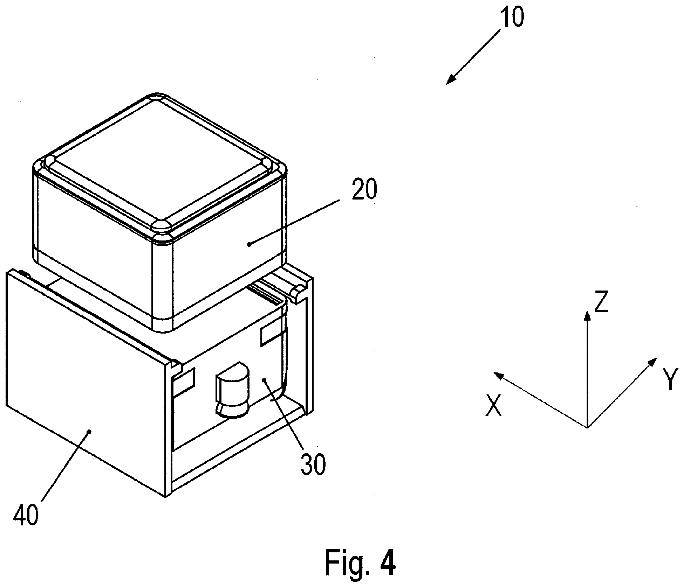

Anschließend bewegt sich das fahrerlose Transportfahrzeug 30 weiter in die Längsrichtung X und fährt in die Übergabestation 40 ein. Figur 4 zeigt das System 10 aus Figur 1 mit in der Übergabestation 40 befindlichem fahrerlosen Transportfahrzeug 30. Der Transportbehälter 20 befindet sich dabei in der Vertikalrichtung Z oberhalb der Übergabestation 40.

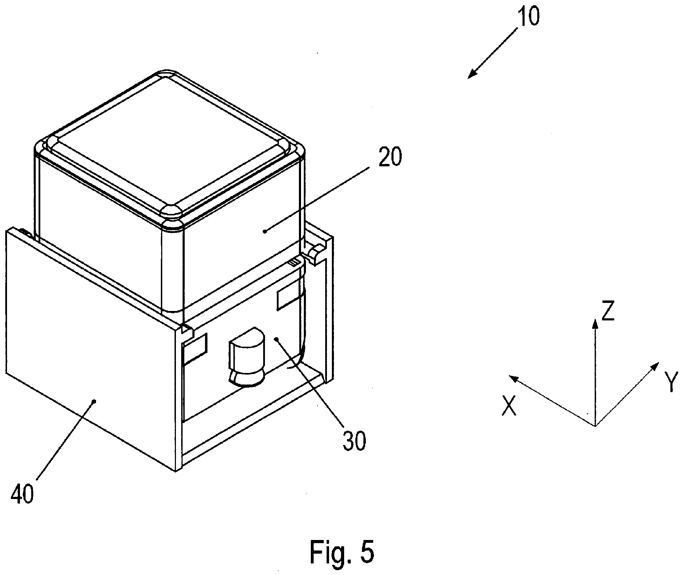

Anschließend wird der Transportbehälter 20 von der Hubeinheit des fahrerlosen Transportfahrzeugs 30 abgesenkt, also in die Vertikalrichtung Z nach unten bewegt, und auf der Übergabestation 40 abgesetzt. Figur 5 zeigt das System 10 aus Figur 1 mit auf der Übergabestation 40 abgesetztem Transportbehälter 20. Dabei wird auch die Verriegelungsvorrichtung des Transportbehälters 20 mit der zweiten Verriegelungseinheit der Übergabestation 40 verriegelt.

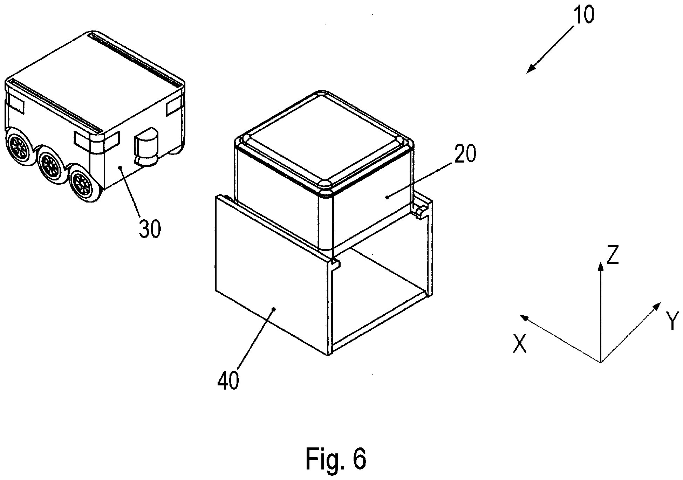

Anschließend entfernt sich das fahrerlose Transportfahrzeug 30 von der Übergabestation 40 und von dem Transportbehälter 20. Figur 6 zeigt das System 10 aus Figur 1 mit wegfahrendem fahrerlosen Transportfahrzeug 30. Die Verriegelungsvorrichtung des Transportbehälters 20 ist mit der zweiten Verriegelungseinheit der Übergabestation 40 verriegelt. Dabei greifen die hier verdeckten Klinken 22 der Verriegelungsvorrichtung in die hier verdeckten Halteleisten 42 ein, welche die zweite Verriegelungseinheit der Übergabestation 40 bilden.

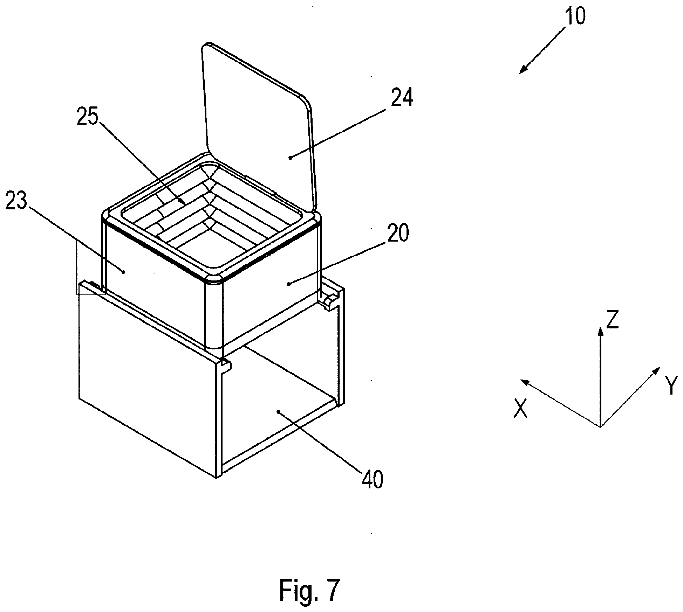

Figur 7 zeigt das System 10 aus Figur 1 mit geöffnetem Transportbehälter 20. Der Empfänger der Waren, also eine zum Öffnen des Transportbehälters 20 befugte Person, hebt zunächst die von dem Verriegelungsmodul verursachte Verriegelung des Deckels 24 mit dem Grundgehäuse 23 auf. Anschließend wird der Deckel 24 geöffnet. Der Empfänger entnimmt nun die Waren aus dem Hohlraum 25 des Transportbehälters 20.

Optional werden nun Waren, die von der Übergabestation 40 weg zu transportieren sind, in den Hohlraum 25 des Transportbehälters 20 eingesetzt. Anschließend wird der Deckel 23 des Transportbehälters 20 geschlossen und durch das Verriegelungsmodul mit dem Grundgehäuse 24 verriegelt. Dabei ist die Verriegelungsvorrichtung des Transportbehälters 20 noch mit der zweiten Verriegelungseinheit der Übergabestation 40 verriegelt.

Das fahrerlosen Transportfahrzeug 30 fährt in die Übergabestation 40 ein. Mittels der Ansteuereinheit des fahrerlosen Transportfahrzeugs 30 wird die Verriegelungsvorrichtung des Transportbehälters 20 von der zweiten Verriegelungseinheit der Übergabestation 40 entriegelt. Mittels der Hubeinheit des fahrerlosen Transportfahrzeugs 30 wird der Transportbehälter 20 angehoben, also in die Vertikalrichtung Z nach oben bewegt.

Das fahrerlosen Transportfahrzeug 30 fährt nun mit dem Transportbehälter 20 aus der Übergabestation 40 aus, und der Transportbehälter 20 wird von der Hubeinheit des fahrerlosen Transportfahrzeugs 30 abgesenkt, also in die Vertikalrichtung Z nach unten bewegt. Die Verriegelungsvorrichtung des Transportbehälters 20 wird mit der ersten Verriegelungseinheit des fahrerlosen Transportfahrzeugs 30 verriegelt. Anschließend wird der Transportbehälter 20 von dem fahrerlosen Transportfahrzeug 30 von der Übergabestation 40 weg transportiert.

### Bezugszeichenliste

- 10: System zum Transport von Waren
- 20: Transportbehälter
- 22: Klinke
- 23: Grundgehäuse
- 24: Deckel
- 25: Hohlraum
- 30: fahrerloses Transportfahrzeug
- 32: Ausnehmung
- 33: Chassis
- 34: Laufrad
- 40: Übergabestation
- 42: Halteleiste
- 43: erster Seitenschenkel
- 44: zweiter Seitenschenkel
- 45: dritter Seitenschenkel
- X: Längsrichtung
- Y: Querrichtung
- Z: Vertikalrichtung

## Patentansprüche

1. System (10) zum Transport von Waren, umfassend
mindestens einen Transportbehälter (20) zur Aufnahme von Waren,
mindestens ein fahrerloses Transportfahrzeug (30) zum Transport des mindestens einen Transportbehälters (20) und
mindestens eine Übergabestation (40), an welcher der mindestens eine Transportbehälter (20) positionierbar ist,
und dass
das fahrerlose Transportfahrzeug (30) eine erste Verriegelungseinheit aufweist, und dass
die Übergabestation (40) eine zweite Verriegelungseinheit aufweist, und dass
der mindestens eine Transportbehälter (20) eine Verriegelungsvorrichtung aufweist, welche mit der ersten Verriegelungseinheit des mindestens einen fahrerlosen Transportfahrzeugs (30) sowie
mit der zweiten Verriegelungseinheit der mindestens einen Übergabestation (40) verriegelbar ist, **dadurch gekennzeichnet dass**
die Übergabestation (40) annähernd in Form eines U-Profils ausgebildet ist und einen ersten Seitenschenkel (43), einen zweiten Seitenschenkel (44) und einen dritten Seitenschenkel (45), welcher den ersten Seitenschenkel (43) und den zweiten Seitenschenkel (44) verbindet, aufweist, und dass
der dritte Seitenschenkel (45) annähernd flächig ausgebildet ist und sich rechtwinklig zu einer Vertikalrichtung (Z) erstreckt, und dass der erste Seitenschenkel (43) und der zweite Seitenschenkel (44) annähernd flächig ausgebildet sind und sich rechtwinklig zu einer Querrichtung (Y) erstrecken, und dass
der erste Seitenschenkel (43) und der zweite Seitenschenkel (44) in der Querrichtung (Y) beabstandet voneinander angeordnet sind, und dass
zwischen den Seitenschenkeln (43, 44) ein Durchgangsbereich gebildet ist, welcher sich in eine Längsrichtung (X) erstreckt, und dass
eine Ausdehnung des Durchgangsbereichs in der Querrichtung (Y) derart gewählt ist, dass ein Einfahren des fahrerlosen Transportfahrzeugs (30) in den Durchgangsbereich möglich ist.

2. System (10) nach Anspruch 1, **dadurch gekennzeichnet, dass**
das mindestens eine fahrerlose Transportfahrzeug (30) eine Ansteuereinheit aufweist,
mittels welcher die Verriegelungsvorrichtung von der ersten Verriegelungseinheit entriegelbar ist, und
mittels welcher die Verriegelungsvorrichtung von der zweiten Verriegelungseinheit entriegelbar ist.

3. System (10) nach Anspruch 2, **dadurch gekennzeichnet, dass**
die Verriegelungsvorrichtung derart ausgestaltet ist, dass in Abwesenheit der Ansteuereinheit die Verriegelungsvorrichtung automatisch mit der ersten Verriegelungseinheit oder mit der zweiten Verriegelungseinheit verriegelt wird.

4. System (10) nach Anspruch 2, **dadurch gekennzeichnet, dass**
die Verriegelungsvorrichtung mittels der Ansteuereinheit mit der ersten Verriegelungseinheit verriegelbar ist, und dass
die Verriegelungsvorrichtung mittels der Ansteuereinheit mit der zweiten Verriegelungseinheit verriegelbar ist.

5. System (10) nach mindestens einem der vorangegangenen Ansprüche,
**dadurch gekennzeichnet, dass**
das mindestens eine fahrerlose Transportfahrzeug (30) eine Hubeinheit aufweist,
mittels welcher der mindestens eine Transportbehälter (20) in die Vertikalrichtung relativ zu einem Chassis (33) des fahrerlosen Transportfahrzeugs (30) bewegbar ist.

6. System (10) nach mindestens einem der vorangegangenen Ansprüche,
**dadurch gekennzeichnet, dass**
das mindestens eine fahrerlose Transportfahrzeug (30) eine Kommunikationsschnittstelle zur Kommunikation mit dem mindestens einen Transportbehälter (20) und/oder
mit der mindestens einen Übergabestation (40) aufweist.

7. System (10) nach mindestens einem der vorangegangenen Ansprüche,
**dadurch gekennzeichnet, dass**
die mindestens eine Übergabestation (40) eine Kommunikationsschnittstelle
zur Kommunikation mit dem mindestens einen Transportbehälter (20) und/oder
mit dem mindestens einen fahrerlosen Transportfahrzeug (30) aufweist.

8. System (10) nach mindestens einem der vorangegangenen Ansprüche,
**dadurch gekennzeichnet, dass**
der mindestens eine Transportbehälter (20) eine Kommunikationsschnittstelle
zur Kommunikation mit dem mindestens einen fahrerlosen Transportfahrzeug (30) und/oder mit der mindestens einen Übergabestation (40) aufweist.

9. System (10) nach mindestens einem der vorangegangenen Ansprüche,
**dadurch gekennzeichnet, dass**
der mindestens eine Transportbehälter (20) ein Grundgehäuse (23) und
einen Deckel (24), mittels welchem das Grundgehäuse (23) verschließbar ist, aufweist, wobei das Grundgehäuse (23) und der Deckel (24) einen Hohlraum (25) umgeben,
in welchen zu transportierende Waren einsetzbar sind.

10. System (10) nach mindestens Anspruch 9, **dadurch gekennzeichnet, dass**
der mindestens eine Transportbehälter (20) ein Verriegelungsmodul aufweist,
mittels welchem der Deckel (24) mit dem Grundgehäuse (23) verriegelbar ist.

11. Verfahren zum Transport von Waren mittels eines Systems (10) nach mindestens einem der vorangegangenen Ansprüche, wobei
die Verriegelungsvorrichtung des Transportbehälters (20) mit der ersten Verriegelungseinheit des fahrerlosen Transportfahrzeugs (30) verriegelt wird;
der Transportbehälter (20) von dem fahrerlosen Transportfahrzeug (30) zu der Übergabestation (40) transportiert wird;
die Verriegelungsvorrichtung des Transportbehälters (20) von der ersten Verriegelungseinheit des fahrerlosen Transportfahrzeugs (30) entriegelt wird; und
die Verriegelungsvorrichtung des Transportbehälters (20) mit der zweiten Verriegelungseinheit der Übergabestation (40) verriegelt wird.

12. Verfahren nach Anspruch 11, wobei
zu transportierende Waren in einen Hohlraum (25) des Transportbehälters (20) eingesetzt werden,
bevor der Transportbehälter (20) von dem fahrerlosen Transportfahrzeug (30) zu der Übergabestation (40) transportiert wird.

13. Verfahren nach einem der Ansprüche 11 bis 12, wobei
zu transportierende Waren in einen Hohlraum (25) des Transportbehälters (20) eingesetzt werden,
nachdem die Verriegelungsvorrichtung des Transportbehälters (20) mit der zweiten Verriegelungseinheit der Übergabestation (40) verriegelt wird.

14. Verfahren nach einem der Ansprüche 11 bis 13, wobei
nachdem die Verriegelungsvorrichtung des Transportbehälters (20) mit der zweiten Verriegelungseinheit der Übergabestation (40) verriegelt wird,
die Verriegelungsvorrichtung des Transportbehälters (20) von der zweiten Verriegelungseinheit der Übergabestation (40) entriegelt wird;
die Verriegelungsvorrichtung des Transportbehälters (20) mit der ersten Verriegelungseinheit des fahrerlosen Transportfahrzeugs (30) verriegelt wird; und
der Transportbehälter (20) von dem fahrerlosen Transportfahrzeug (30) von der Übergabestation (40) weg transportiert wird.

## Claims

1. A system (10) for transporting goods, comprising
at least one transport container (20) for receiving goods,
at least one driverless transport vehicle (30) for transporting the at least one transport container (20) and
at least one transfer station (40) on which the at least one transport container (20) can be positioned,
and that
the driverless transport vehicle (30) has a first locking unit, and that the transfer station (40) has a second locking unit, and that the at least one transport container (20) has a locking device which is lockable to the first locking unit of the at least one driverless transport vehicle (30) as well as to the second locking unit of the at least one transfer station (40), **characterised in that**
the transfer station (40) is substantially in the form of a U-profile and has a first lateral limb (43), a second lateral limb (44) and a third lateral limb (45), which connects the first lateral limb (43) and the second lateral limb (44), and **in that**
the third lateral limb (45) is substantially planar and extends at right angles to a vertical direction (Z), and **in that** the first lateral limb (43) and the second lateral limb (44) are substantially planar and extend at right angles to a transverse direction (Y), and **in that** the first lateral limb (43) and the second lateral limb (44) are arranged spaced apart from one another in the transverse direction (Y), and **in that**
a passage region is formed between the lateral limbs (43, 44) and extends in a longitudinal direction (X), and **in that**
an extension of the passage region in the transverse direction (Y) is selected such that it is possible for the driverless transport vehicle (30) to travel into the passage region.

2. A system (10) according to claim 1, **characterised in that**
the at least one driverless transport vehicle (30) has a control unit by means of which the locking device can be unlocked from the first locking unit and by means of which the locking device can be unlocked from the second locking unit.

3. A system (10) according to claim 2, **characterised in that**
the locking device is configured such that in the absence of the control unit, the locking device is automatically locked to the first locking unit or to the second locking unit.

4. A system (10) according to claim 2, **characterised in that**
the locking device is lockable to the first locking unit by means of the control unit, and **in that** the locking device is lockable to the second locking unit by means of the control unit.

5. A system (10) according to at least one of the preceding claims,
**characterised in that**
the at least one driverless transport vehicle (30) has a lifting unit by means of which the at least one transport container (20) is movable in the vertical direction relative to a chassis (33) of the driverless transport vehicle (30).

6. A system (10) according to at least one of the preceding claims,
**characterised in that**
the at least one driverless transport vehicle (30) has a communications interface for communication with the at least one transport container (20) and/or with the at least one transfer station (40).

7. A system (10) according to at least one of the preceding claims,
**characterised in that**
the at least one transfer station (40) has a communications interface for communication with the at least one transport container (20) and/or with the at least one driverless transport vehicle (30).

8. A system (10) according to at least one of the preceding claims,
**characterised in that**
the at least one transport container (20) has a communications interface for communication with the at least one driverless transport vehicle (30) and/or with the at least one transfer station (40).

9. A system (10) according to at least one of the preceding claims,
**characterised in that**
the at least one transport container (20) has a basic housing (23) and a cover (24) by means of which the basic housing (23) can be closed, wherein the basic housing (23) and the cover (24) surround a hollow space (25) into which goods to be transported can be placed.

10. A system (10) according to at least claim 9, **characterised in that**
the at least one transport container (20) has a locking module by means of which the cover (24) is lockable to the basic housing (23).

11. A method for transporting goods by means of a system (10) according to at least one of the preceding claims, wherein
the locking device of the transport container (20) is locked to the first locking unit of the driverless transport vehicle (30);
the transport container (20) is transported to the transfer station (40) by the driverless transport vehicle (30);
the locking device of the transport container (20) is unlocked from the first locking unit of the driverless transport vehicle (30); and
the locking device of the transport container (20) is locked to the second locking unit of the transfer station (40).

12. A method according to claim 11, wherein
goods to be transported are placed into a hollow space (25) of the transport container (20) before the transport container (20) is transported to the transfer station (40) by the driverless transport vehicle (30).

13. A method according to one of claims 11 to 12, wherein
goods to be transported are placed into a hollow space (25) of the transport container (20) after the locking device of the transport container (20) is locked to the second locking unit of the transfer station (40).

14. A method according to any one of claims 11 to 13, wherein
after the locking device of the transport container (20) is locked to the second locking unit of the transfer station (40),
the locking device of the transport container (20) is unlocked from the second locking unit of the transfer station (40);
the locking device of the transport container (20) is locked to the first locking unit of the driverless transport vehicle (30); and
the transport container (20) is transported away from the transfer station (40) by the driverless transport vehicle (30).

## Revendications

1. Système (10) dévolu au transport de marchandises comprenant
au moins un conteneur de transport (20) conçu pour recevoir des marchandises,
au moins un véhicule de transport (30) sans conducteur, affecté au convoyage du conteneur de transport (20) à présence minimale, et
au moins un poste de transfert (40) au niveau duquel ledit conteneur de transport (20) à présence minimale peut être positionné,
sachant
que le véhicule de transport (30) sans conducteur est muni d'une première unité de verrouillage et que le poste de transfert (40) est doté d'une seconde unité de verrouillage, et
que ledit conteneur de transport (20), à présence minimale, est pourvu d'un dispositif de verrouillage pouvant être verrouillé
avec la première unité de verrouillage du véhicule de transport (30) sans conducteur, à présence minimale,
ainsi qu'avec la seconde unité de verrouillage du poste de transfert (40) à présence minimale, **caractérisé par le fait que**
le poste de transfert (40) est approximativement réalisé sous la forme d'un profilé en U et comprend une première aile latérale (43), une deuxième aile latérale (44) et une troisième aile latérale (45) solidarisant ladite première aile latérale (43) et ladite deuxième aile latérale (44) ; **par le fait que**
la troisième aile latérale (45) est de réalisation approximativement aplatie et s'étend perpendiculairement à une direction verticale (Z), la première aile latérale (43) et la deuxième aile latérale (44) étant de réalisation approximativement aplatie et s'étendant à angle droit par rapport à une direction transversale (Y) ; **par le fait que**
ladite première aile latérale (43) et ladite deuxième aile latérale (44) sont disposées à distance l'une de l'autre dans ladite direction transversale (Y) ; **par le fait**
**qu'**une zone de passage, formée entre lesdites ailes latérales (43, 44), s'étend dans une direction longitudinale (X) ; et **par le fait**
**qu'**une étendue de la zone de passage dans ladite direction transversale (Y) est choisie de façon à permettre, au véhicule de transport (30) sans conducteur, de pénétrer dans ladite zone de passage.

2. Système (10) selon la revendication 1, **caractérisé par le fait que**
le véhicule de transport (30) sans conducteur, à présence minimale, comporte une unité de pilotage
au moyen de laquelle le dispositif de verrouillage peut être déverrouillé d'avec la première unité de verrouillage et
au moyen de laquelle ledit dispositif de verrouillage peut être déverrouillé d'avec la seconde unité de verrouillage.

3. Système (10) selon la revendication 2, **caractérisé par le fait que**
le dispositif de verrouillage est conçu de façon telle qu'en l'absence de l'unité de pilotage, ledit dispositif de verrouillage soit verrouillé automatiquement avec la première unité de verrouillage ou avec la seconde unité de verrouillage.

4. Système (10) selon la revendication 2, **caractérisé par le fait que**
le dispositif de verrouillage peut être verrouillé avec la première unité de verrouillage au moyen de l'unité de pilotage ; et **par le fait que**
ledit dispositif de verrouillage peut être verrouillé avec la seconde unité de verrouillage au moyen de ladite unité de pilotage.

5. Système (10) selon au moins l'une des revendications précédentes, **caractérisé par le fait que**
le véhicule de transport (30) sans conducteur, à présence minimale, comporte une unité de levage
au moyen de laquelle le conteneur de transport (20), à présence minimale, peut être mû dans la direction verticale par rapport à un châssis (33) dudit véhicule de transport (30) sans conducteur.

6. Système (10) selon au moins l'une des revendications précédentes, **caractérisé par le fait que**
le véhicule de transport (30) sans conducteur, à présence minimale, comporte un interface de communication conçu pour établir la communication avec le conteneur de transport (20) à présence minimale et/ou avec le poste de transfert (40) à présence minimale.

7. Système (10) selon au moins l'une des revendications précédentes, **caractérisé par le fait que**
le poste de transfert (40), à présence minimale, comporte un interface de communication conçu pour établir la communication avec le conteneur de transport (20) à présence minimale et/ou avec le véhicule de transport (30) sans conducteur, à présence minimale.

8. Système (10) selon au moins l'une des revendications précédentes, **caractérisé par le fait que**
le conteneur de transport (20), à présence minimale, comporte un interface de communication conçu pour établir la communication avec le véhicule de transport (30) sans conducteur, à présence minimale, et/ou avec le poste de transfert (40) à présence minimale.

9. Système (10) selon au moins l'une des revendications précédentes, **caractérisé par le fait que**
le conteneur de transport (20), à présence minimale, comprend un boîtier de base (23) et un couvercle (24) au moyen duquel ledit boîtier de base (23) peut être fermé, sachant que
ledit boîtier de base (23) et ledit couvercle (24) ceinturent une cavité (25)
dans laquelle des marchandises à transporter peuvent être insérées.

10. Système (10) selon au moins la revendication 9, **caractérisé par le fait que**
le conteneur de transport (20), à présence minimale, comporte un module de verrouillage au moyen duquel le couvercle (24) peut être verrouillé avec le boîtier de base (23).

11. Procédé de transport de marchandises au moyen d'un système (10) conforme à au moins l'une des revendications précédentes, dans lequel
le dispositif de verrouillage du conteneur de transport (20) est verrouillé avec la première unité de verrouillage du véhicule de transport (30) sans conducteur ;
ledit conteneur de transport (20) est convoyé vers le poste de transfert (40) par ledit véhicule de transport (30) sans conducteur ;
le dispositif de verrouillage du conteneur de transport (20) est déverrouillé d'avec ladite première unité de verrouillage du véhicule de transport (30) sans conducteur ; et
ledit dispositif de verrouillage du conteneur de transport (20) est verrouillé avec la seconde unité de verrouillage dudit poste de transfert (40).

12. Procédé selon la revendication 11, dans lequel
des marchandises à transporter sont insérées dans une cavité (25) du conteneur de transport (20) avant que ledit conteneur de transport (20) soit convoyé vers le poste de transfert (40) par le véhicule de transport (30) sans conducteur.

13. Procédé selon l'une des revendications 11 à 12, dans lequel
des marchandises à transporter sont insérées dans une cavité (25) du conteneur de transport (20) après que le dispositif de verrouillage dudit conteneur de transport (20) a été verrouillé avec la seconde unité de verrouillage du poste de transfert (40).

14. Procédé selon l'une des revendications 11 à 13, dans lequel,
après que le dispositif de verrouillage du conteneur de transport (20) a été verrouillé avec la seconde unité de verrouillage du poste de transfert (40),
ledit dispositif de verrouillage du conteneur de transport (20) est déverrouillé d'avec ladite seconde unité de verrouillage du poste de transfert (40) ;
ledit dispositif de verrouillage dudit conteneur de transport (20) est verrouillé avec la première unité de verrouillage du véhicule de transport (30) sans conducteur ; et
ledit conteneur de transport (20) est convoyé à l'écart dudit poste de transfert (40) par ledit véhicule de transport (30) sans conducteur.
